# EUROPEAN PATENT SPECIFICATION

(11) **EP 0 937 566 B1**
(45) Date of publication and mention of the grant of the patent: **12.02.2003**
(21) Application number: 98119084.6
(22) Date of filing: 09.10.1998
(51) Int. Cl.: B29C 45/72

(54) **Cooling and removal system for injection moulded hollow bodies**
System zum Kühlen und Entfernen von spritzgegossenen Hohlkörpern
Système de refroidissement et d'enlèvement de corps creux moulés par injection

(30) Priority: 23.02.1998 IT MI980347
(43) Date of publication of application: 25.08.1999
(73) Proprietor: BM Biraghi S.p.A., 20052 Monza (MI) (IT)
(72) Inventor: Biraghi, Giovanni, 20052 Monza (MI) (IT)
(74) Representative: Petruzziello, Aldo

(56) References cited:
- EP-A- 0 158 105
- EP-A- 0 718 084
- US-A- 4 721 452
- US-A- 5 114 327
- US-A- 5 631 030

## Description

The present invention relates to a cooling and removal system for injection molded hollow bodies.

Said invention refers in particular to a cooling system for those hollow bodies commonly called preforms made of thermoplastic material such as PP, PS, PC, PVC and particularly PET, destined for those commercial sectors where it is necessary to replace glass because of its high degree of fragility, such as cosmetics and toiletries, containers for medicines or pharmaceutical products, containers for food products with low pH, particularly bottles for water or beverages in general, containers for reusable products, containers that have special necks, too complex to be manufactured by other methods.

Processing of synthetic or plastic resin-based hollow bodies is currently based on two independent stages: injection molding and blow molding.

Depending upon production volumes and the type of preforms, the injection and blowing stages can be accomplished on a single machine (single-stage) or on two machines as in the case in point.

During the injection stage the synthetic resins are melted from a solid state to a semiliquid state. The molten material is injected into molds or small cavities in such a way as to assume the shape of a small empty cylinder which represents the preform. These preforms are expelled from the mold, cooled and then sent by conveyor belt for storage.

The preforms are taken from storage and sent to the second stage of molding by stretch-blowing. In this second stage the preform is heated to a temperature that will allow it to be stretched and shaped by blowing inside a certain mold so as to obtain the desired shape. The hollow container, in its final form is cooled, stored and is then ready to by placed on the market.

According to the known art, see e.g. EP-A-0 158 105, the preforms are currently removed from their molds during the injection stage , at a temperature of about 70 °C, by means of a gripping hand. This gripping hand consists of a plate structure having hollow housings into which the preforms are drawn by suction. In the cooled gripping hand the preforms undergo a first cooling, reaching a temperature of about 50 °C.

By means of a removal plate the preforms are taken from the gripping hand and positioned in a plurality of cooling stations, normally three, in which they reach a temperature of about 30 °C, which is low enough to avoid a deformation of the preforms during transfer on a conveyor belt below, on which they are discharged, toward the storage unit.

In practice the extraction plate discharges one molding at a time into the subsequent cooling stations, so as to allow the preforms to stay longer in the respective stations and thus ensure adequate cooling, which would not be possible with a single station.

It is obvious that use of a plurality of cooling stations implies a considerable size and complexity of the machine which extends longitudinally, parallel to the injection press. As a result maintenance and production costs are high, due above all to the hydraulic system that must be able to serve a large area consisting of the three cooling stations and to the systems able to support the preforms in the different cooling stations, which must be replaced at each change in production.

Moreover, since the three cooling stations extend longitudinally on one side of the press, they obstruct the necessary maintenance operations thereof, which can be carried out only by dismantling and removing the cooling system. This clearly entails an excessive waste time and long breaks in production, as well as high maintenance costs.

To overcome these drawbacks some known injection molding systems see e.g. US-A-4.721.452 use an oversized gripping hand able to house a number of preforms that is a multiple of the number of molds. In this way, each molding is held for longer in the gripping hand and moved to and fro therewith, before being picked up by the removal plate.

This system, however, besides having a high cost, does not allow high production speeds to be reached because of the large inert mass to be moved. Moreover, as with other known methods, there is external cooling of the preforms, which are expelled with an internal temperature that is still rather high.

The object of the invention is to eliminate these drawbacks providing a cooling and removal system for injection molded hollow bodies that is compact, economical and simple to produce.

This object is achieved, according to the invention, with the characteristics listed in the appended independent claims.

Preferred embodiments of the invention emerge from the dependent claims.

In the system for cooling and removal of injection molded hollow bodies according to the invention provision is made for a plate having nozzle elements i.e. functioning as a cooling core pin and able to be inserted in the cavities of the preforms held by a griping hand that removes them from the press molds.

Each nozzle i.e. a cooling core pin is able, through a pneumatic system, to create a vacuum inside the respective preform in order to suck it onto the nozzle itself or to give off a jet of compressed air to expel the preform. Each nozzle is cooled to a temperature of about 5 °C by means of a hydraulic system so as to cool the preforms internally.

In a preferred embodiment of the invention a number m (with m>1) of groups of nozzles is provided in the cooling plate, each group having a number n of nozzles equal to the number of preforms removed by the gripping hand.

On start-up of the machine, during the first m molding cycles the gripping hand removes the n preforms from the molds and positions them in the respective consecutive sections of the cooling plate at each cycle. Brushless motors can be used advantageously to drive the movements of the gripping hand which must be extremely precise to allow the preforms to be fitted together accurately with the respective nozzles.

When filled completely, the cooling plate is rotated into a position with the preforms facing downward and the preforms from the first group are expelled, that is, the coolest ones which have a temperature of about 15 °C which, thanks to the rapid cooling, avoids crystallization of the preform and possible deformations during transfer thereof on the conveyor belt toward a storage station; the cooling plate is then rotated again returning to the original position and the emptied group receives the n preforms of the last molding removed by the gripping hand; the cooling plate is then rotated again into the expelling position and the preforms of the second molding are expelled; the plate then returns to the starting position to receive the preforms of the last molding in the emptied section.

These cycles are repeated in sequence, allowing continuous high-speed production, for example at a rate of 15" for each production cycle.

From this brief description the advantages of the cooling and removal system for hollow bodies according to the invention are clear.

In fact eliminating the three cooling stations in sequence used in the prior art achieves a considerable saving of space, a simplification of the machine and the possibility of production changes without excessive idle times. This is translated into a cost saving due to the lower complexity of the cooling system and the possibility of simple, rapid maintenance operations.

With the cooling system according to the invention, by cooling the preform on the inside faster and more efficient cooling is achieved. This is translated into shorter production times.

Further characteristics of the invention will be made clearer by the detailed description that follows, referring to a purely exemplary and therefore non-limiting embodiment thereof, illustrated in the appended drawings, in which:
Figure 1 is a side elevation view of the cooling and removal system for injection molded hollow bodies according to the invention;
Figure 2 is a similar view to that of Figure 1 in a subsequent working stage;
Figure 3 is a front view taken from the left with respect to Figure 1, showing in particular the cooling and removal system;
Figure 4 is a plan view from above in Figure 1;
Figure 5 is a sectional view of a cooling nozzle, taken along the line A-A in Figure 2;
Figure 6 is an exploded view of the cooling nozzle in Figure 4.

The cooling and removal system according to the invention for hollow bodies 1 injection molded by means of a press not shown in the appended figures will be described with the aid of the figures.

After each molding a gripping hand 2, having an alternating rectilinear movement, is responsible for removing the preforms from the open mold.

The gripping hand consists of a substantially rectangular plate in which n cavities 3 are made to receive the n preforms 1 obtained from a molding.

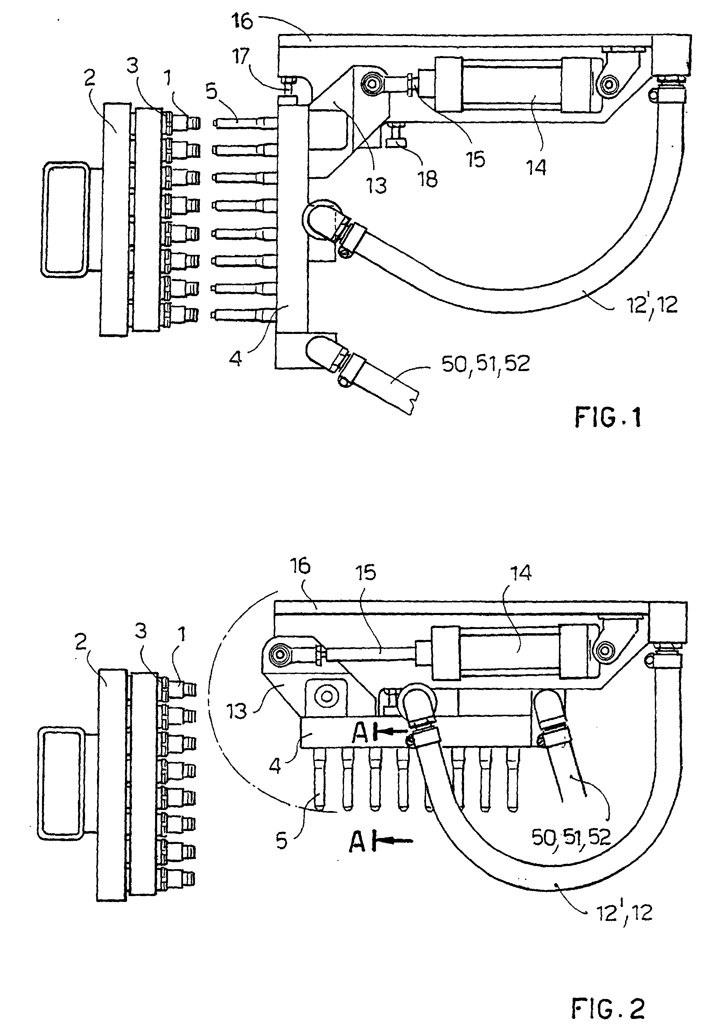

A pneumatic system, sucks the preforms from the molds of the press into the cavities 3 by air suction, housing them in the bottom part, whilst the neck of the preforms is disposed on the outside (Figures 1 and 2). Retention of the preforms in the cavities 3 of the gripping hand 2 is ensured by the vacuum created therein.

High-precision driving means, such as brushless motors for example, control the movement of the gripping hand 2, to allow precise positioning thereof with respect to a cooling and removal plate 4, disposed in a vertical position for receiving the preforms, as shown in Figure 1.

The cooling plate 4 has a number of nozzles 5 that is a multiple of n (m x n) on a surface thereof facing toward the gripping hand. Said nozzles 5 have a substantially cylindrical shape with an outside diameter slightly smaller then the inside diameter of the preforms 1, so that each nozzle 5 can be inserted inside the respective preform 1 carried by the gripping hand 2.

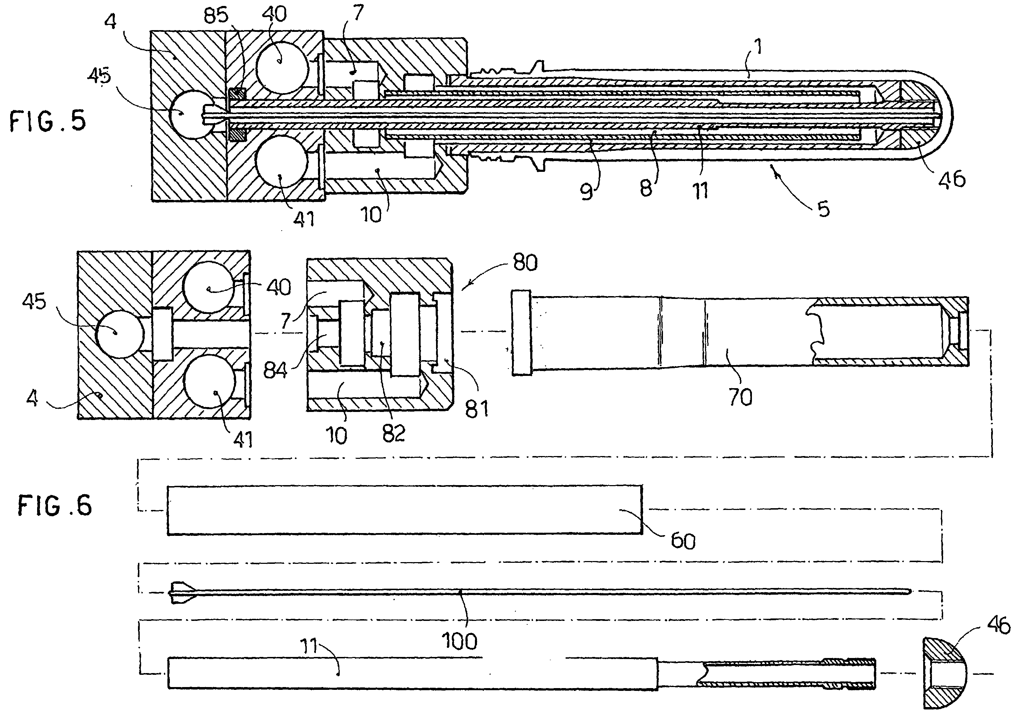

As shown in Figures 5 and 6, the single nozzle 5 comprises a first central tubular element 11, with a substantially cylindrical shape. Said tube 11 is connected to the pneumatic system of the press for the creation of a vacuum during retention of the preforms 1 and to give off a jet of compressed air during expulsion of the preforms 1.

A second tubular element 60 having a larger inside diameter than the outside diameter of the first tube 11 is disposed coaxially to the tube 11, so as to create a hollow space or inner conduit 8 between the inner surface and the outer surface of the tube 11.

A third tubular element 70 having a larger inside diameter than the outside diameter of the tube 60 is disposed coaxially to the tubes 11 and 60, so as to form a further hollow space or outer conduit 9 between the inner surface and the outer surface of the tube 60.

The tubes 11 and 70 are blocked in the tip of the nozzle 5 by means of a threaded stopper 46 that closes the tube 70.

Inside the tube 11 is situated a needle valve 100 that closes the entrance of the tube 11 and thus shuts off the passage of compressed air when the preform 1 is detached from the tubular element 70, preventing drops in pressure and thus allowing the compressed air to be available for the preforms not yet detached from the respective tubular elements 70.

At the opposite end to the tip of the nozzle a base 80 is provided in which a circular seat 81 suitable for housing the corresponding end of the tube 70 and more internally a second circular seat 82 housing the corresponding end of the tube 60. A terminal cavity 84 with a smaller diameter allows the passage of the tube 11, which is blocked at the base 80 by means of a nut 85.

Also provided in the base 80 are an inlet conduit 7 that allows the entry of cooling fluid into the inner conduit 8 of the nozzle and a conduit 10 that allows the fluid to exit from the outer conduit 9 of the nozzle 5.

The base 80 is destined to engage with the removal and cooling plate 4. In this way the tube 11 is communication, with a tight seal, with a conduit 45 provided in the plate 4 and connected by means of at least one outer tube 50, 51, 52 (see Figures 1-3) to a pneumatic system; the conduit 7 for entry of the cooling fluid is connected to a conduit 40 provided in the plate 4 and connected by means of an outer tube 12 to the hydraulic cooling system; the fluid outlet conduit 10 is connected to a conduit 41 provided in the plate 4 and connected by means of an outer tube 12' to the hydraulic cooling system.

The cooling system according to the invention is described below.

The cooling fluid from the cooling system of the machine is sent to the outer tube 12 which introduces it into the conduit 40 inside the plate 4; by means of the inlet conduits 7 the fluid enters into the conduit 8 of the nozzle, then flows into the outermost conduit 9 cooling the tube 70. In this way the preform 1 is cooled on the inside, its inner surface being in contact with the outer surface of the tube 70. The fluid from the conduit 9 goes toward the outlet conduit 10 and is introduced into the conduit 41 inside the plate 4, then returns into the cooling system through the outer tube 12' and is put into recirculation. Clearly the cooling fluid paths can be changed or inverted without departing from the scope of the invention.

In the case of preforms that are shorter in length than the nozzle 5, a ring 6 can be provided, in contact with the surface of the plate 4, such as to distance the preform 1 which engages with the nozzle 5.

In figure 1 a cooling plate 4 is shown in its vertical receiving position, ready to receive the preforms 1 from the gripping hand 2. In this position the cooling plate 4 has its upper surface abutting against a blocking base 17 connected to the frame 16 of the machine.

The plate 4 is connected by lever means 13 to the rod 15 of a piston of a linear actuator 14 which can be hydraulic or pneumatic.

Once the nozzles 5 have received the preforms 1, the linear actuator 14 moves the rod 15 forward causing a rotation of about 90° of the plate 4 which places itself in a horizontal expelling position, as shown in Figure 2. In this position the rear surface of the plate 4 abuts against a stopping base 18 integral with the frame 16 of the machine and the preforms, by means of a jet of compressed air in the channels 45, are expelled and fall onto a conveyor belt which carries them to storage.

In a preferred embodiment of the invention a gripping hand having n cavities 3 arranged in parallel columns is provided.

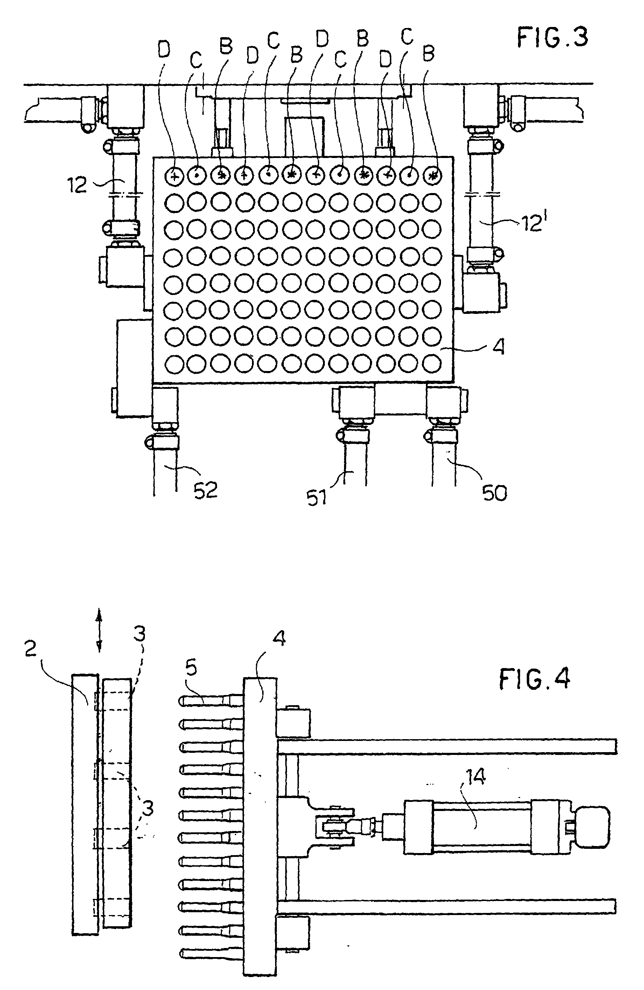

Figure 3 shows a cooling plate 4 divided into three sections, each comprising n nozzles 5 arranged in columns offset from each other; a first section B indicated with the symbols *, a second section C indicated with the symbols •, and a third section D indicated with the symbols +.

The production cycle of the injection molding machine according to the invention will be described below.

On start-up of the machine, in a starting position the gripping hand 2 has its surface in which the cavities 3 are provided facing towards the molds and the cooling plate 4 is in the vertical position for receiving the preforms.

### Step 1

The gripping hand 2 picks up the n preforms 1 of a molding, fills the fist section B of the cooling and removal plate 4 and returns to the starting position.

### Step 2

The gripping hand 2 removes another n preforms 1 from the molds, fills the second section C of the plate 4 and returns to the starting position.

### Step 3

The gripping hand 2 removes another n preforms 1 from the molds, fills the third section D of the plate 4, and returns to the starting position.

### Step 4

The liner actuator 14 that causes rotation of the plate 4 bringing it into its horizontal expelling position is activated; the pneumatic system that sends compressed air to the first section B through the conduit 50 is activated causing expulsion of the preforms from said section.

### Step 5

Through activation of the linear actuator 14 the plate 4 returns to its starting position and the gripping hand 2 having a further group of n preforms fills the first section B again.

### Step 6

The linear actuator 14 which causes rotation of the plate 4 bringing it into its horizontal expelling position is activated; the pneumatic system that sends compressed air to the second section C through the conduit 51 is activated causing expulsion of the preforms from said section.

### Step 7

Through activation of the linear actuator 14 the plate 4 returns to its starting position and the gripping hand 2 which in the meantime has picked up a further group of n preforms from the molds fills the second section C.

### Step 8

The linear actuator 14 which causes rotation of the plate 4 bringing it into its horizontal expelling position is activated, the pneumatic system that sends compressed air to the third section D through the conduit 52 is activated causing expulsion of the preforms from said section.

### Step 9

Through activation of the linear actuator 14 the plate 4 returns to its starting position and the gripping hand 2 which in the meantime has picked up another n preforms from the molds fills the third section D.

### Step 10

The cycle continues starting from step 4 until the machine is stopped.

## Claims

1. A cooling and removal system for injection molded hollow bodies or preforms, comprising a gripping hand (2) consisting of a plate having a number n of cavities (3) equal to the number of preforms (1) produced with one molding of the injection molding machine, said gripping hand (2) being able to pick up said preforms (1) from the molds for subsequent transfer to a cooling station, **characterized in that** said cooling station comprises a plate (4) on the surface of which a number of nozzles (5) equal to a multiple **m (where m>1)** of the number of said cavities (3) is provided, said nozzles (5) being able to receive, cool and expel said preforms (1).

2. A cooling system according to claim 1, **characterized in that** said plate (4) comprises a plurality m of sections (B, C, D), each with a number (n) of nozzles (5), to receive the (n) preforms of a molding of the press, said sections (B, C, D) being filled in sequence and emptied in the same order, to allow each group of preforms (1) to remain longer on the plate (4).

3. A cooling system according to claim 2, **characterized in that** said sections (B, C, D) comprise columns of nozzles (5) offset with respect to each other.

4. A cooling system according to one of the previous claims, **characterized in that** said plate (4) is rotated from a substantially vertical position able to receive the preforms (1) to a substantially horizontal position with the preforms facing downward, suitable for expulsion of said preforms (1) and vice versa.

5. A cooling system according to claim 4, **characterized in that** said rotation of the plate (4) is obtained by means of a linear actuator (14) acting on lever means (13) connected thereto.

6. A cooling system according to claim 1, **characterized in that** said nozzles (5) have a substantially cylindrical shape and have an outside diameter equal to or smaller than the inside diameter of said preforms (1) so that they can be inserted thereinto.

7. A cooling system according to claim 6, **characterized in that** each of said nozzles (5) comprises:
a tube (11) connected to the pneumatic system of the machine to retain the preforms through creation of a vacuum and to expel them by means of a jet of compressed air; a tube (60) coaxial with said tube (11) and having a greater inside diameter than the outside diameter of said tube (11), so as to create a first conduit (8) for the passage of a cooling fluid between the outer surface of the tube (11) and the inner surface of the tube (60);
A tube (70) coaxial with said tube (60), having a greater inside diameter than the outside diameter of said tube (60), so as to create a second conduit (9) for the passage of a cooling fluid between the outer surface of the tube (60) and the inner surface of the tube (70), so as to ensure cooling of the outer surface of said tube (70) which comes into contact with the inner surface of the preform (1);
a needle valve (100) placed inside the tube (11), able to shut off the passage of compressed air when the preform (1) has been detached from the tubular element (70).

8. A cooling system according to claim 7, **characterized in that** at least one conduit (45) is provided in said cooling and removal plate (4) to connect said tubes (11) of each nozzle to the pneumatic system and at least one conduit (40; 41) to connect the conduits (8; 9) respectively to the hydraulic cooling system.

9. An injection molding machine for hollow bodies, **comprising** a cooling and removal system for said hollow bodies (1) according to any one of the preceding claims.

10. A method for cooling and removing injection molded hollow bodies or preforms (1), comprising the following steps:
opening of the molds of the press and picking up of the said preforms (1) by means of a gripping hand (3);
moving of said gripping hand (2) into a position in register with a cooling and removal plate (4) having a plurality of nozzles (5) on its surface equal to **a multiple m (where m >1) of** the number (n) of preforms (1) picked up by the gripping hand (2) at each molding;
suction of said preforms (1) onto the respective nozzles (5) and retention thereof by creation of a vacuum therein;
inner cooling of the preforms (1) by means of heat exchange between the inner surface of the preform and the outer surface of the nozzle which is cooled by means of circulation of a cooling fluid on its inside;
expulsion of the preforms (1) by means of a jet of compressed air coming out of the nozzles.

11. A method according to claim 10, **characterized in that** said plate (4) has a plurality (m) of sections each of which comprises a number (n) of nozzles equal to the number of preforms (1) picked up by the gripping hand (2) in which said (m) sections are filled in sequence and emptied in the same order to allow each group of preforms (1) to remain longer on the plate (4).

## Patentansprüche

1. Ein Kühlungs- und Ausziehsystem für spritzgegossene Hohlkörper oder Vorformen, das eine Greifhand (2) umfaßt, die aus einer Platte mit einer Anzahl von Hohlräumen (3) besteht, die der Anzahl der Vorformen (1) entspricht, welche jeweils mit einem Schuß der Spritzgußmaschine hergestellt werden, wobei die genannte Greifhand (2) die genannten Vorformen (1) zwecks anschließenderm Transport zur Kühlstation aus den Formen nehmen kann, **dadurch gekennzeichnet, daß** die genannte Kühlstation eine Platte (4) umfaßt, auf deren Oberfläche sich eine Anzahl von Düsen (5) befindet, die der eines Mehrfachen m (wobei m>1 ist) der Anzahl der genannten Hohlräume (3) entspricht, wobei die genannten Düsen (5) die genannten Vorformen (1) jeweils in Empfang nehmen, kühlen und auswerfen können.

2. Ein Kühlsystem gemäß Anspruch 1, **dadurch gekennzeichnet, daß** die genannte Platte (4) eine Vielzahl m von Abschnitten (B, C, D) umfaßt, die jeweils eine Anzahl (n) von Düsen (5) aufweisen, um die (n) Vorformen eines Schusses der Presse in Empfang zu nehmen, wobei die genannten Abschnitte (B, C, D) jeweils sequentiell gefüllt und in der gleichen Reihenfolge geleert werden, um jeder Gruppe von Vorformen (1) eine längere Verweilzeit auf der Platte (4) zu ermöglichen.

3. Ein Kühlsystem gemäß Anspruch 2, **dadurch gekennzeichnet, daß** die genannten Abschnitte (B, C, D) Düsenkolonnen (5) umfassen, die jeweils gegeneinander versetzt angeordnet sind.

4. Ein Kühlsystem gemäß einem beliebigen der vorausgegangenen Ansprüche, **dadurch gekennzeichnet, daß** die genannte Platte (4) von einer im wesentlichen senkrechten Stellung, in der die Vorformen (1) empfangen werden können, in eine im wesentlichen waagerechte Stellung gedreht wird, in der die Vorformen nach unten gewendet sind und die geeignet ist, die genannten Vorformen (1) auszuwerfen und umgekehrt.

5. Ein Kühlsystem gemäß Anspruch 4, **dadurch gekennzeichnet, daß** die genannte Umdrehung der Platte (4) durch einen linearen Trieb (14) erzielt wird, der damit verbundene Hebelelemente (13) betätigt.

6. Ein Kühlsystem gemäß Anspruch 1, **dadurch gekennzeichnet, daß** die genannten Düsen (5) eine im wesentlichen zylindrische Form sowie einen Außendurchmesser aufweisen, der dem Innendurchmesser der genannten Vorformen (1) entspricht oder kleiner ist, um in deren Inneres eingesetzt werden zu können.

7. Ein Kühlsystem gemäß Anspruch 6, **dadurch gekennzeichnet, daß** jede der genannten Düsen (5) folgendes umfaßt:
Ein Rohr (11), das mit der Pneumatikanlage der Maschine verbunden ist, um die Vorformen durch Herstellung eines Vakuums festzuhalten und sie durch einen Strahl Preßluft auszuwerfen;
ein Rohr (60), das koaxial zu dem gennnten Rohr (11) verläuft und einen Innendurchmesser aufweist, der größer als der Außendurchmesser des genannten Rohrs (11) ist, um eine erste Rohrleitung (8) für den Durchfluß einer Kühlflüssigkeit zwischen der Außenoberfläche des Rohrs (11) und der Innenoberfläche des Rohrs (60) herzustellen;
ein koaxial mit dem gennanten Rohr (60) verlaufendes Rohr (70), das einen Innendurchmesser aufweist, der größer als der Außendurchmesser des genannten Rohrs (60) ist, um eine zweite Rohrleitung (9) für den Durchfluß einer Kühlflüssigkeit zwischen der Außenoberfläche (60) und der Innenoberfläche der Rohrs (70) herzustellen, und zwar so, daß die Kühlung der Außenoberfläche des genannten Rohrs (70) garantiert wird, das in Kontakt mit der Innenoberfläche der Vorform (1) kommt;
ein Nadelventil (100), das sich im Innern des Rohrs (11) befindet und den Durchfluß der Preßluft unterbinden kann, wenn die Vorform (1) sich aus dem Rohrelement (70) gelöst hat.

8. Ein Kühlsystem gemäß Anspruch 7, **dadurch gekennzeichnet, daß** an der genannten Kühl- und Ausziehplatte (4) mindestens eine Rohrleitung (45) zur Verbindung dieser Rohre (11) jeder einzelnen Düse mit der Pneumatikanlage und mindestens eine Rohrleitung (40, 41) vorgesehen sind, um die Rohrleitungen (8, 9) jeweils mit dem hydraulischen Kühlsystem zu verbinden.

9. Eine Spritzgußmschine für Hohlkörper, die ein Kühl- und Ausziehsystem für die genannten Hohlkörper (1) umfaßt, gemäß einem beliebigen der vorausgegangenen Ansprüche.

10. Eine Methode zur Kühlung und Ausziehung spritzgegossener Hohlkörper oder Vorformen (1), die folgende Schritte umfaßt:
Öffnung der Formen der Presse und Entnahme der genannten Vorformen (1) durch eine Greifhand (3);
Verstellung der genannten Greifhand (2) in eine Position, die mit einer Kühl- und Ausziehplatte (4) ausgerichtet ist, die an ihrer Oberfläche eine Vielzahl von Düsen (5) aufweist, die einem Mehrfachen m (wobei m > 1 ist) der Anzahl (n) von Vorformen (1) entspricht, die bei jedem Schuß von der Greifhand (2) entnommen werden;
Ansaugung der genannten Vorformen auf die jeweiligen Düsen (5) und deren Zurückhaltung durch das darin geschaffene Vakuum;
Innere Kühlung der genannten Vorformen (1) durch Wärmeaustausch zwischen der inneren Oberfläche der Vorform und der Außenoberfläche der Düse, die durch den Umlauf von Kühlflüssigkeit in ihrem Inneren gekühlt wird;
Auswurf der Vorformen (1) durch einen aus den Düsen kommenden Strahl Preßluft.

11. Eine Methode gemäß Anspruch 10, **dadurch gekennzeichnet, daß** die genannte Platte (4) eine Vielzahl (m) von Abschnitten aufweist, von denen jeder eine Anzahl (n) von Düsen umfaßt, welche der der Vorformen (1) entspricht, die durch die Greifhand (2) entnommen werden, wobei die genannten (m) Abschnitte sequentiell gefüllt und jeweils in derselben Reihenfolge entleert werden, um eine längere Verweilzeit jeder Gruppe von Vorformen (1) auf der Platte (4) zu ermöglichen.

## Revendications

1. Système de refroidissement et d'extraction de corps creux ou de préformes moulés à injection, comprenant une main de prise (2) constituée d'une plaque ayant un nombre (n) de cavités (3) égal au nombre de préformes (1) produites à partir d'un moulage de la machine à mouler à injection, ladite main de prise (2) étant prévue pour prélever lesdites préformes (1) des moules pour qu'elles soient ensuite déplacées vers une station de refroidissement, **caractérisé en ce que** ladite station de refroidissement comprend une plaque (4) sur la surface de laquelle se trouve un nombre de buses (5) égal à un multiple m (où m>1) du nombre desdites cavités (3), lesdites buses (5) pouvant recevoir, refroidir et expulser lesdites préformes (1).

2. Système de refroidissement selon la revendication 1, **caractérisé en ce que** ladite plaque (4) comprend une pluralité m de sections (B, C, D), chacune avec un nombre (n) de buses (5), pour recevoir les (n) préformes d'un moulage de la presse, lesdites sections (B, C, D) étant remplies l'une après l'autre et vidées dans le même ordre, pour permettre à chaque groupe de préformes (1) de rester plus longtemps sur la plaque (4).

3. Système de refroidissement selon la revendication 2, **caractérisé en ce que** lesdites sections (B, C, D) comprennent des colonnes de buses (5) en offset les unes par rapport aux autres.

4. Système de refroidissement selon une revendication quelconque parmi les revendications susmentionnées, **caractérisé en ce que** ladite plaque (4) est tournée d'une position substantiellement verticale permettant de recevoir les préformes (1) à une position substantiellement horizontale où les préformes sont tournées vers le bas, permettant l'expulsion desdites préformes (1) et vice-versa.

5. Système de refroidissement selon la revendication 4, **caractérisé en ce que** ladite rotation de la plaque (4) est obtenue au moyen d'un actionneur linéaire (14) agissant sur des dispositifs à levier (13) qui y sont reliés.

6. Système de refroidissement selon la revendication 1, **caractérisé en ce que** lesdites buses (5) ont une forme substantiellement cylindrique et présentent un diamètre extérieur inférieur ou égal au diamètre intérieur desdites préformes (1) de façon à ce qu'elles puissent y pénétrer.

7. Système de refroidissement selon la revendication 6, **caractérisé en ce que** chacune desdites buses (5) comprend :
un tuyau (11) relié à l'installation pneumatique de la machine pour retenir les préformes à l'aide de la création de vide et pour les expulser à l'aide d'un jet d'air comprimé ;
un tuyau (60) coaxial par rapport audit tuyau (11) et ayant un diamètre intérieur supérieur au diamètre extérieur dudit tuyau (11), de manière à créer un premier conduit (8) pour le passage d'un fluide de refroidissement entre la surface extérieure du tuyau (11) et la surface intérieure du tuyau (60) ;
un tuyau (70) coaxial par rapport audit tuyau (60), ayant un diamètre intérieur supérieur au diamètre extérieur dudit tuyau (60), de manière à créer un deuxième conduit (9) pour le passage d'un fluide de refroidissement entre la surface extérieure du tuyau (60) et la surface intérieure du tuyau (70), de manière à garantir le refroidissement de la surface extérieure dudit tuyau (70) qui entre en contact avec la surface intérieure de la préforme (1) ;
une aiguille d'obturation (100) placée à l'intérieur du tuyau (11) permettant de fermer le passage de l'air comprimé une fois que la préforme (1) s'est détachée de l'élément tubulaire (70).

8. Système de refroidissement selon la revendication 7, **caractérisé en ce qu'**au moins un conduit (45) est prévu dans ladite plaque de refroidissement et d'extraction (4) pour relier lesdits tuyaux (11) de chaque buse à l'installation pneumatique et au moins un conduit (40 ; 41) pour relier respectivement les conduits (8 ; 9) à l'installation de refroidissement hydraulique.

9. Machine à mouler des corps creux à injection, comprenant un système de refroidissement et d'extraction desdits corps creux (1) selon une revendication quelconque parmi les revendications susmentionnées.

10. Méthode de refroidissement et d'extraction de corps creux ou de préformes (1) moulés à injection, comprenant les stades suivants :
ouverture des moules de la presse et prélèvement desdites préformes (1) à l'aide de la main de prise (3) ;
déplacement de ladite main de prise (2) dans une position en correspondance avec une plaque de refroidissement et d'extraction (4) présentant sur sa surface une pluralité de buses (5) égale à un multiple m (où m>1) du nombre (n) de préformes (1) prélevées par la main de prise (2) à chaque moulage ;
aspiration desdites préformes (1) sur les buses respectives (5) et maintien de celles-ci à l'aide de la création d'un vide à l'intérieur de celles-ci ;
refroidissement interne des préformes (1) à l'aide d'un échange de chaleur entre la surface intérieure de la préforme et la surface extérieure de la buse qui est refroidie au moyen de la circulation d'un fluide de refroidissement à l'intérieur de celle-ci ;
expulsion des préformes (1) à l'aide d'un jet d'air comprimé sortant des buses.

11. Méthode selon la revendication 10, **caractérisée en ce que** ladite plaque (4) a une pluralité (m) de sections, chacune d'entre elles comprenant un nombre (n) de buses égal au nombre de préformes (1) prélevées par la main de prise (2) où lesdites (m) sections sont remplies l'une après l'autre et vidées dans le même ordre pour permettre à chaque groupe de préformes (1) de rester plus longtemps sur la plaque (4).
